Europäisches Patentamt

European Patent Office

Office européen des brevets

(11) Publication number: 0 460 316 A1

# (12) EUROPEAN PATENT APPLICATION

(21) Application number: 90306279.2

(22) Date of filing: 08.06.90

(51) Int. Cl.5: **A45D 4/16**

(43) Date of publication of application:
**11.12.91 Bulletin 91/50**

(84) Designated Contracting States:
**AT BE CH DE DK ES FR GB GR IT LI LU NL SE**

(71) Applicant: **JMK International Inc.**
**4800 Bryant Irvin Court**
**Fort Worth Texas 76107(US)**

(72) Inventor: **Gibbon, Robert M.**
**7728 Incline Terrace**
**Fort Worth, Texas 76179(US)**

(74) Representative: **Dummett, Thomas Ian Peter**
**Dummett Copp & Co. 14 The Square**
**Martlesham Heath Ipswich Suffolk, IP5**
**7SL(GB)**

(54) Microwave/electric heatable hair curler and method.

(57) The present invention provides a microwave heatable hair curler which is also electrically heatable, characterised in that it comprises a generally cylindrical curler body 13 having an open interior 15, an exterior 19 and opposing ends 21, 23, said body 13 being comprised of a matrix material having blended therein an electromagnetic absorptive material to produce a homogenous matrix composition which is heatable by exposure to microwave energy and which has sufficient rigidity to roll hair. The hair curler is preferably made from a blend of a polyorganosiloxane gum, a particulate electromagnetic absorptive material, a filler and a catalyst and extruded as in a cylindrical shape. The hair curler is heatable by exposure to microwave energy in a microwave oven or can be used with a variety of commerically available electric heating units.

FIG. 1

The present invention relates to a microwave/electrical heatable hair curler and method, notably to devices for drying and curling hair through the alternate use of microwave and electric heating sources and to a method for using such devices.

BACKGROUND TO THE INVENTION

Hair curlers are known for use in drying and curling hair and have been provided in a variety of configurations. Generally, the prior art curlers have comprised molded cylinders or spools of microwave transmissive materials such as plastic, which were heated by steam or hot water or which had hollow cores which were fitted around electrically heated rods. Other prior art electrically heated curlers were formed as flexible, rod-like bodies which could be bent over themselves to retain a hair tress wound thereon, see for example, U.S. Patent No. 4,584,462, issued April 22, 1986, to Morrison. The known electrically heated hair curlers required a lengthy pre-heating time before reaching operating temperatures and failed to hold heat efficiently.

Other prior art hair curlers were comprised of moulded synthetic compositions which included microwave absorptive materials, such as ferrite, so that such compositions were microwave heatable. However, the known microwave heatable curlers were sealed at both ends, making them unsuitable for use in the existing electric heating units. Also the known prior art designs were complicated, containing internal sleeves, heat sink materials, wicking materials, and the like.

It is an object of the present invention to provide a hair curler which is rapidly heated to operating temperatures in a microwave oven, but which is also heatable in existing electrical heating units.

Another object of the invention is to provide a microwave heatable hair curler which is alternately heatable by an electrical source and which has superior heat loss characteristics to the prior art electrically heated hair curlers.

Additional objects, features and advantages will be apparent in the written description which follows.

SUMMARY OF THE INVENTION

Accordingly, the present invention provides a microwave actuable hair curler, comprising a generally cylindrical curler body having an open interior, an exterior and opposing ends, said body being comprised of a matrix material having blended therein an electromagnetic absorptive material to produce a homogenous matrix composition which is heatable by exposure to microwave energy and which has sufficient rigidity to roll hair.

Preferably, the hair curler of the invention has a tubular curler body with an open interior, an exterior and at least one open end, said body being comprised of a matrix material having blended therein an electromagnetic absorptive material to produce a homogeneous matrix composition which is heatable by exposure to microwave energy.

In the preferred embodiment, the curler body is generally cylindrical having an axial internal bore having a pre-selected internal diameter which is sized to allow the curler body to be received over the upwardly extending prongs of an electrically heated hair curling apparatus. The matrix material is preferably a silicone rubber composition which has been extruded through a die and then cut to the desired length, said silicone rubber composition being blended from a polyorganosiloxane gum, a particulate electromagnetic absorptive material, a filler and a curing catalyst to produce a homogeneous matrix composition which is heatable by exposure to microwave energy.

The curlers of the invention are heatable either by exposure to microwave energy or by an electrical heating source.

DESCRIPTION OF THE DRAWINGS:

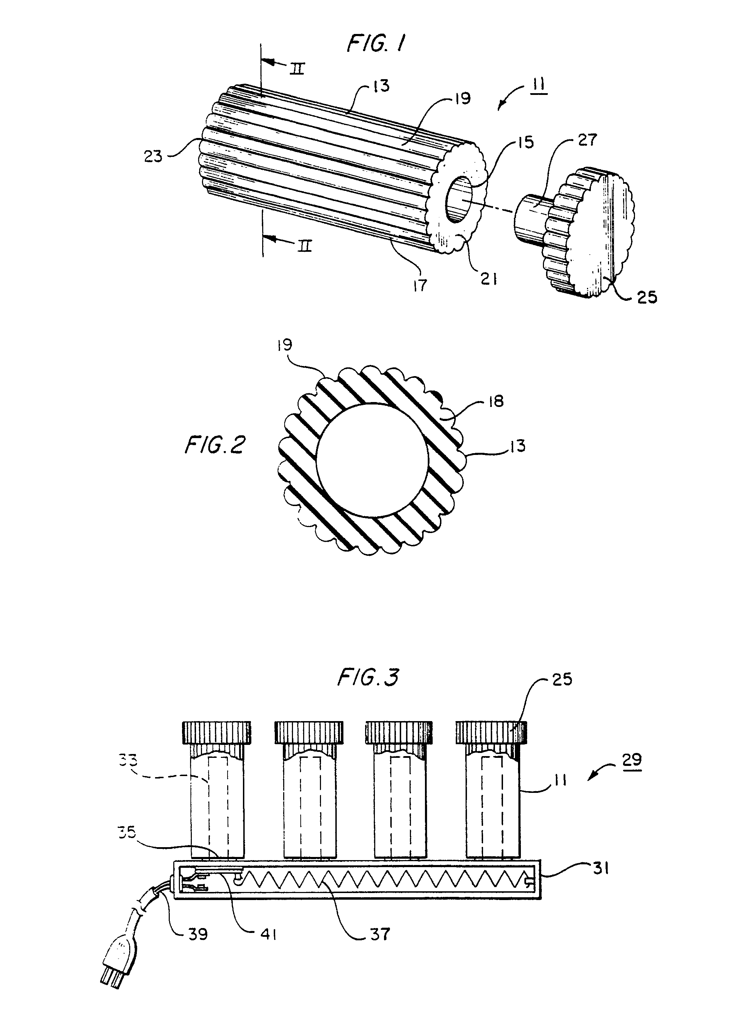

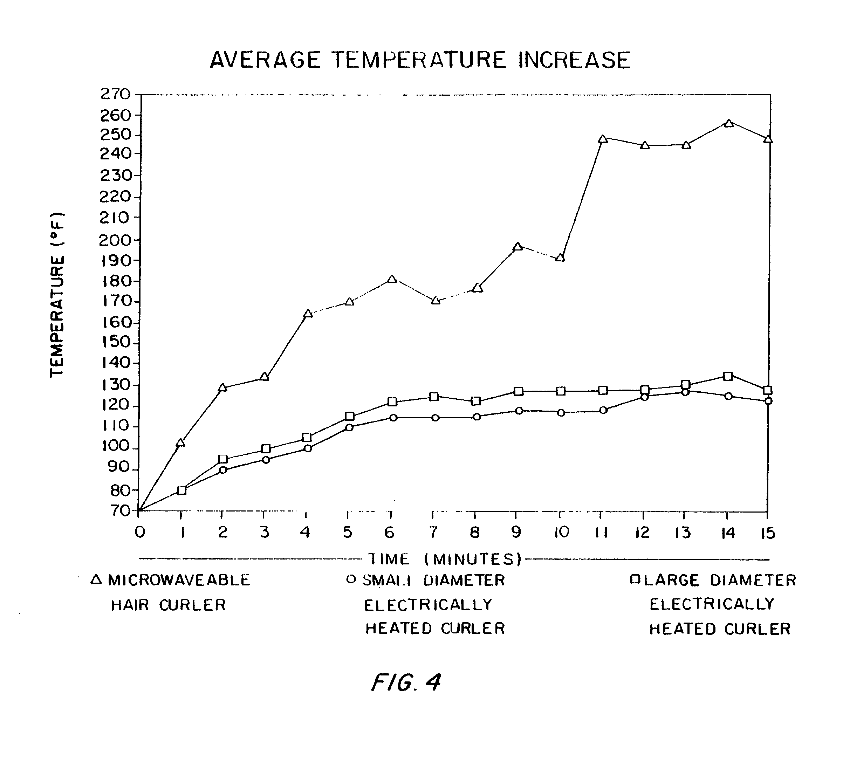

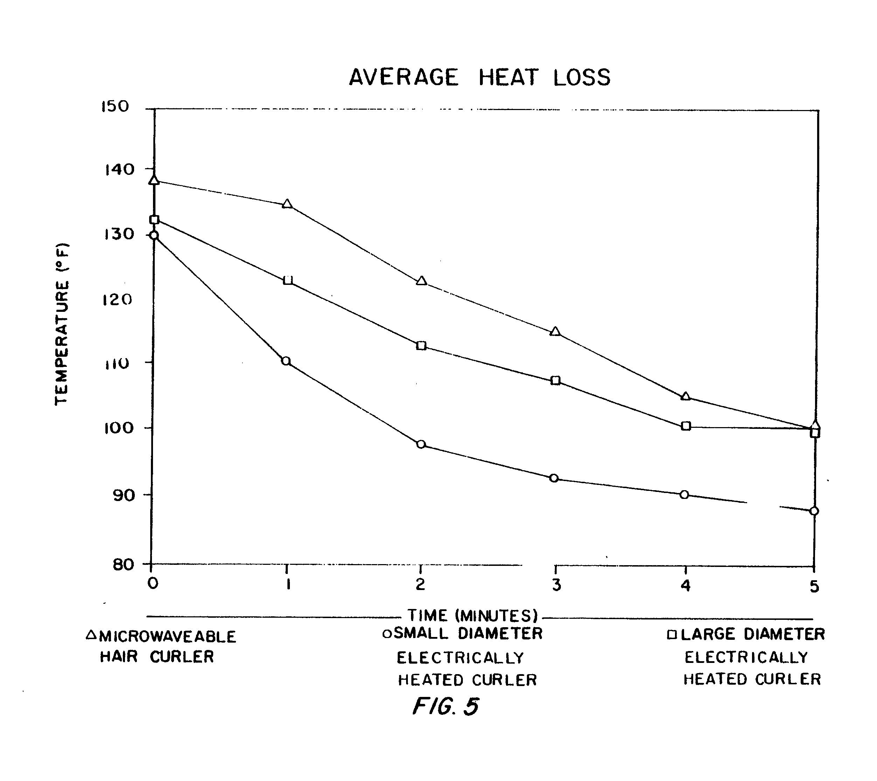

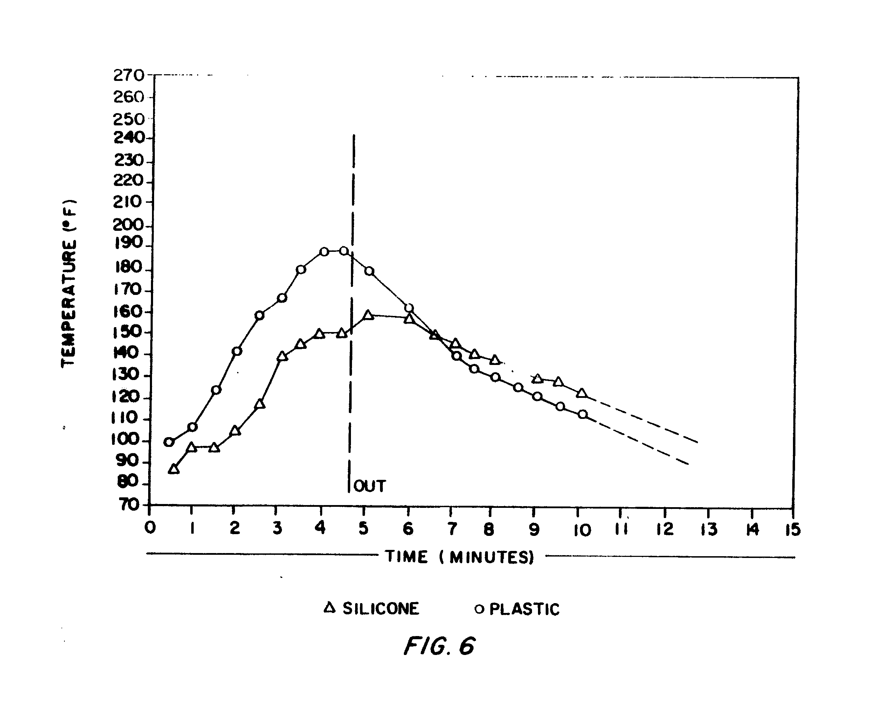

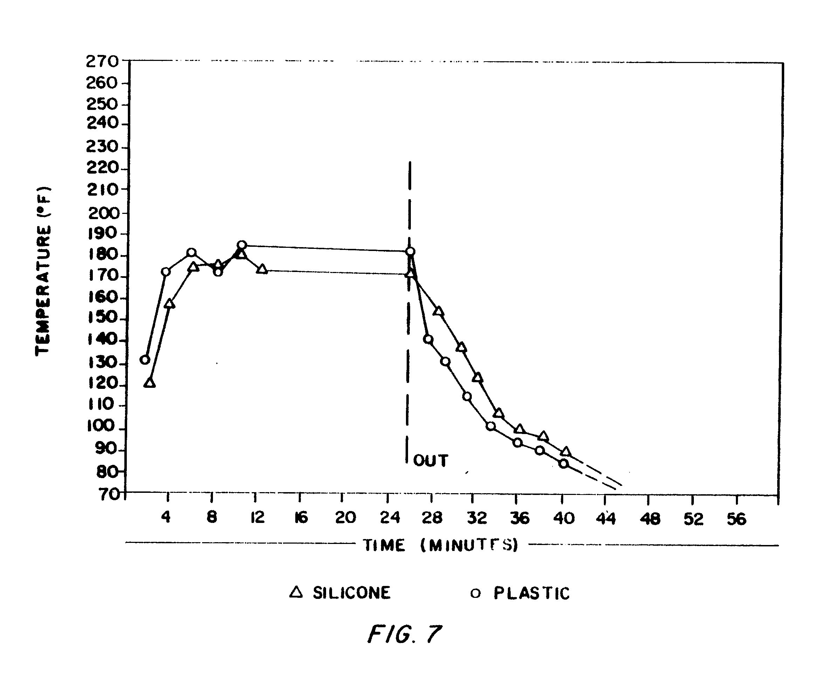

The invention will now be described with reference to a preferred embodiment thereof as shown in the accompanying drawings in which Figure 1 is a side, perspective view of a hair curler of the invention showing the end cap removed for ease of illustration; Figure 2 is a cross-sectional view taken along lines II-II of a curler of Figure 1; Figure 3 is perspective view of an electrical heating apparatus having the curlers of the invention mounted thereon; Figure 4 is a graph of temperature increase versus time comparing the curlers of the invention when heated by microwave energy to commercially available electrically heated hair curlers; Figure 5 is a graph of heat loss versus time comparing the curlers of the invention when heated by microwave energy to commercially available, electrically heated hair curlers; Figure 6 is a graph of heat loss versus time which compares the electrically heated hair curlers of the invention with prior art electrically heated curlers for a warm-up cycle of approximately 5 minutes; Figure 7 is a graph similar to Figure 6 comparing electrically heated curlers of the invention with prior art electrically heated curlers for a 26 minute warm-up cycle.

DESCRIPTION OF THE PREFERRED EMBODIMENT OF THE INVENTION

Figure 1 shows a microwave heatable hair curler of the invention designated generally as 11. The hair curler 11 can have various configurations, for example an elongate, rod-like shape such as that shown in the previously mentioned U.S. Patent No. 4,584,462, the disclosure of which is incorporated herein by reference. Preferably, the hair curler 11 comprises a flexible, axially elongated generally cylindrical curler body 13, having an open interior or axial bore 15 and an exterior 17 as shown in Figure 1. The exterior 17 has a plurality of elongate ribs 19 running longitudinally for the length of the body. The ribs 19 give the periphery of the curler 11 a scalloped appearance when viewed from the end, or in the cross-sectional view of Figure 2.

As shown in Figures 1 and 2, the body 13 has opposing ends 21, 23, at least one of which is open. In the embodiment shown, the end 21 is provided with an end cap 25 having an outer configuration similar to that of the body 13 and having an inward projection 27 which is received within the open interior 15 of the curler body 13 so as to provide a closed end to the bore in the body 13.

The hair curler bodies 13 of the invention are comprised of a matrix material having blended therein an electromagnetic absorptive material to produce a homogeneous matrix composition which is heatable by exposure to microwave energy. The matrix material can comprise any of a number of commercially available mouldable and extrudable thermoplastic and thermosetting materials, e.g. a natural or synthetic rubbers, for example styrene butadiene rubber, ethylene propylene rubber, chloroprene or nitrile rubber. Other plastic type materials for example polysulfides, urethanes and acrylic materials can be utilized. It is only necessary that the matrix material be curable to a state which is rigid enough to roll hair and that the matrix material allow the incorporation of a microwave absorptive material. Because many of the above materials contain carbon black reinforcement and may suffer from long term embrittlement due to oxidation, ozone attack and general use, the preferred matrix material is a silicone rubber composition.

The end cap 25 can be of any of the above listed matrix materials and preferably does not contain therein the microwave absorptive material, whereby the end cap can remain cool during microwave heating.

The preferred matrix material for the curler bodies 13 can be manufactured by blending together a polyorganosiloxane gum with a particulate electromagnetic absorptive material to produce a homogeneous silicone rubber composition which is heatable by exposure to microwave energy. The organopolysiloxane polymers or gums employed in the preferred matrices of the invention are well known materials and can be made by standard methods known in the art. The preferred polymer is an organopolysiloxane gum which contains methyl, vinyl, phenyl and/or 3, 3, 3-trifluropropyl radicals attached to the silicone atoms of the polymeric siloxane. Examples of organopolysiloxane gums are those polymers, copolymers and mixtures thereof wherein the siloxy units can be dimethylsiloxane, phenylmethylsiloxane, 3, 3, 3-trifluoropropylmethyl siloxane, diphenylsiloxane, methylvinylsiloxane, and phenylvinylsiloxane. A discussion of the preparation of such compounds can be found, for example, in: Eaborn, D., "Organo Silicone Compounds", Academic Press, New York, 1959; Montermoso J.C., "Silicone Rubers", Morton, E.D., "Introduction to Rubber Technology", Reinhold Publishing Corp., New York, 1959; Rochow, E.G., "An Introduction to the Chemistry of Silicones", Ed. John Wiley and Sons, New York, 1951.

The organopolysiloxane polymer used in making the curlers of the invention is most preferably a dimethyvinylsiloxy ended polydiorganosiloxane having a percentage of all organic radicals in the gum, 99.80 percent by weight methyl radicals and about 0.2 percent by weight vinyl radicals. A particularly preferred polymer for present use has a specific gravity in the range from about 1.24 - 1.29 and a durometer of about 40 - 55.

In order to provide a matrix composition which is microwave heatable, a particulate electromagnetic energy absorptive material is blended with the matrix material. A number of such materials are commercially available, including ferrites, powdered iron, powdered aluminum, and zinc oxide. The preferred absorptive material is zinc oxide and when blended in the range from about 5 to 30 parts per 100 parts polyorganosiloxane gum produces a silicone rubber blend which is heatable in the range of 130° - 135° F by exposure to microwave radiation in a 700 watt microwave oven for 1 to 3 minutes.

The polyorganosiloxane gum can contain any of the conventional filler materials. These filler materials are well known in the art and are commercially available from a number of sources. The preferred material is a silica filler, sometimes referred to a reinforcing filler, or a mixture of silica filler and an extending filler. Examples of silica filler which can be utilized to reinforce the organopolysiloxane elastomer are fumed silica, precipitated silica, silica aerogel, etc. The filler material, including reinforcing and non-reinforcing fillers, is preferably used in the range of about 10-260 parts of filler per 100 parts of organopolyorganosiloxane gum or elastomer, most preferably in the range of about 20 to 80 parts of filler.

Various curing agents can be employed to effect the more rapid conversion of the polyorganosiloxane compositions to the cured, solid elastic state, for example, benzoyl peroxide, bis (2,4-dichlorobenzoyl)-peroxide, and the like. These curing agents are normally present in the polyorganosiloxane composition in an amount ranging from about 0.1 to high as 4 to 8 parts or more based on 100 parts of organpolysiloxane blend.

In addition to the above described ingredients, the silicone rubber matrix compositions of the invention can contain heat stability additives, compression set additives, additives to improve handling properties, dyes or coloring additives and other additives conventionally used in heat cured silicone elastomers and also room temperature cure elastomers.

The preferred silicone rubber matrix composition is made by blending or milling together the various constituents in any suitable order. The following example is intended to be illustrative of the invention:

| | |
|---|---|
| Polyorganosiloxane Gum | 60.0 |
| Zinc Oxide* | 15.0 |
| Fume Silica | 23.0 |
| Structure Control Fluid | 2.0 |
| Pigment (Blue) | 0.6 |
| Benzoyl Peroxide Catalyst | 0.6 |

*Nodular, pure grade zinc oxide having a high surface area (7 sq.m/gm.).

Approximately 100 ft. of the above compound was then extruded through a 0.500 inch O.D. die with a 0.065 I.D. pin to produce a curler body having a generally cylindrical configuration as shown in Figure 1. The extrusion belt speed was set at 28 ft. per minute to obtain a good partial cure of the polymer. The extruded body was then cut into 2.5 inch lengths and the curler segments so produced were post cured at 400° F for one hour. An end cap 25 was installed in one end 21 of each curler body and either fused by heat or by the application of a suitable adhesive.

In the method of the invention, the curlers 11 are heated by either exposure to microwave energy, as in a microwave oven, or by exposure to an electrical heating source. Figure 3 shows a known electrical heating source 29 useful for heating the tubular curlers 11 of the invention. The heating source 29 includes a non-conductive base 31 on which are mounted a plurality of upwardly extending prongs 33. The prongs 33 have one end 35 in heat-transferring connection with an electric heating element 37 located within the base 31. The electric heating element may be connected to a source of electrical current by means of a supply wire 39 and is connected in series with a thermostat 41 in heat transmitting connection with the heating element 37.

The thermostat 41 is selected to cut off the supply of electricity to the heating element 37 when at least one of the prongs 33 provided on the base has attained such temperature that the curler 11 placed on the prong has attained a predetermined temperature of about 130-135° F. Electrical heating sources of the type described are shown, for instance in US Reissue Patent no. 26,766, to Jorgensen, re-issued Jan.13 1970 and entitled "Apparatus For Heating And Setting Hair."

It will be understood that a pouch, such as that shown in U.S. Patent No. 4,584,462, can be used to electrically heat flexible, rod-shaped curlers which have been manufactured of a matrix material and a blended electromagnetic absorptive material according to the technique of the invention.

Figure 4 illustrates the average temperature increase of the tubular curlers shown in Figure 1 as they are heated in a 700 watt microwave oven at 100% power for 0-15 minutes. Temperature at X = O is room temperature, 72° F.

As shown in Figure 4, the microwave heatable hair curlers of the invention reach the desired, useful temperature range of 125° - 135° F in 2-3 minutes of the microwave being actuated. Figure 4 also shows a comparison with commercially available electrically heated tubular curlers. The comparison curlers were heated in a specially designed heat pack according to the manufacturer's directions. The "small" curlers were 7 1/4" long and had an I.D. of 0.64" and an O.D. of 0.4200". The "large" curlers were 7 1/4" long and had an I.D. of 0.64" and an O.D. of 0.5625".

The microwave heatable hair curlers of the invention reached the desired useful temperature range of 125° - 135° F in 2-3 minutes after actuation of the microwave. In this same time interval, the comparison curlers were 25° - 35° F below the desired, useful range of 125o - 135o F.

Figure 5 illustrates the average heat loss of the microwave heatable hair curlers of the invention as compared to the commercially available, electrically heated curlers. The graph depicts the average heat loss of two sets of four rollers each. The microwave heatable rollers were heated for two minutes at 100% power in a 700 watt microwave oven. The comparison rollers were electrically heated. The average temperature was then taken of the rollers every ten seconds for the first two minutes and at one minute intervals for the next three minutes. The average temperature of both sets of rollers was then plotted at one minute intervals. As shown in Figure 5, the curlers of the invention cool at an acceptable rate as compared to the commercially available, electrically heated curlers.

I have discovered that, in addition to offering the versatility of allowing either microwave or electric actuation, the curlers of the invention are actually superior in heat retention characteristics to the prior art, electrically heated curlers. Figure 6 shows that, with a 5 minute electric warm-up cycle, the curlers of the invention hold their heat longer than prior art, electrically heated curlers. Figure 7 is similar to Figure 6 but with the microwave heatable hair curlers heated through a warm-up cycle of approximately 26 minutes on a heating unit such as that shown in Figure 3.

An invention has been provided with several advantages. The hair curlers of the invention can be rapidly heated to operating temperature in a standard microwave oven such as is found in the home. The hair curlers can also be electrically heated on a variety of commercially available electric heating units. The curlers retain their operatinq temperature for a time period which exceeds that of commercially available, electrically heated curlers, even when electrically actuated. Since the matrix material of the end cap does not contain a microwave absorptive material, the end cap remains cool to the touch after the warm-up cycle for ease of use. The hair curlers can be manufactured by a simple extrusion process utilizing an inexpensive die. The silicone rubber composition used in the manufacturing process does not degrade rapidly with time or upon exposure to sunlight, heat or chemicals.

While the invention has been shown in only one of its forms, it is not thus limited but is susceptible to various changes and modifications without departing from the spirit thereof.

## Claims

1. A microwave actuable hair curler, characterised in that it comprises a generally cylindrical curler body 13 having an open interior 15, an exterior 19 and opposing ends 21, 23, said body 13 being comprised of a matrix material having blended therein an electromagnetic absorptive material to produce a homogenous matrix composition which is heatable by exposure to microwave energy and which has sufficient rigidity to roll hair.

2. A hair curler according to claim 1, characterised in that the said matrix material is a silicone rubber composition blended from a polyorganosiloxane gum, a particulate, electromagnetic absorptive material, a filler and a curing catalyst to produce a homogenous matrix composition which is heatable by exposure to microwave energy.

3. A hair curler according to either of claims 1 or 2, characterised in that it is alternately heatable by electrical energy from an associated electrical heating apparatus 29 of the type having upwardly extending heating prongs 33.

4. A hair curler according to claim 3, characterised in that the said open interior 15 has a preselected internal diameter which is sized to allow said curler body 13 to be received over an upwardly extending prong 33 of said electrical heating apparatus 29.

5. A hair curler according to any one of claims 1 to 4, characterised in that it further comprises an end cap 25 for a selected one of said open ends 21, 23 of said generally cylindrical curler body 13.

6. A hair curler according to any one of the preceeding claims, characterised in that the exterior 17 of the curler body 13 has a plurality of elongate ribs 19 which run substantially the length of the curler body 13 between the opposing ends 21, 23 therof.

7. A hair curler according to any one of the preceeding claims, characterised in that it comprises an electrical heating member 29 which has a plurality of upwardly extending heating prongs 33 mounted thereon, at least one of said prongs 33 having a microwave heatable hair curler 11 as claimed in any one of the preceeding claims received thereon, each of said heating prongs 33 being in thermal contact with an element 37 which is connected to an electrical source so as to transfer heat to hair which is wound about the exterior of said curler bodies 13, whereby said curler bodies 13 can be selectively heated electrically and/or by exposure to microwave energy.

8. A method for heating a hair curler as claimed in any one of the preceeding claims, characterised in that the curler 13 is exposed to microwave energy.

*FIG. 1*

*FIG.2*

*FIG.3*

FIG. 4

## AVERAGE HEAT LOSS

△ MICROWAVEABLE
HAIR CURLER

o SMALL DIAMETER
ELECTRICALLY
HEATED CURLER

□ LARGE DIAMETER
ELECTRICALLY
HEATED CURLER

*FIG. 5*

EP 0 460 316 A1

△ SILICONE     ○ PLASTIC

*FIG. 6*

EP 0 460 316 A1

FIG. 7

△ SILICONE    ○ PLASTIC

TIME (MINUTES)

TEMPERATURE (°F)

11

| European Patent Office | EUROPEAN SEARCH REPORT | Application Number |
| | | EP 90 30 6279 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,A | US-A-4 543 863 (HENDERSON)<br>* column 3, lines 49 - 60; figure 7 *<br>– – – | 1,2,6,8 | A 45 D 4/16 |
| Y,A | EP-A-0 049 307 (CURTIS)<br>* page 6, line 31 - page 9, line 19; figures 1-5 *<br>– – – | 1,3,4,7 | |
| A | US-A-4 737 324 (GIBBON)<br>* column 1, line 63 - column 2, line 42 *<br>– – – | 2 | |
| A | EP-A-0 197 824 (PERMA)<br>* claim 7; figure 1 *<br>– – – | 3,4,7,8 | |
| A | US-A-4 743 726 (HUGHES)<br>– – – | | |
| A | DE-A-3 148 538 (WEMPER)<br>– – – | | |
| A | US-A-4 499 355 (WALTER)<br>– – – | | |
| A | US-A-3 858 029 (WALTER)<br>– – – | | |
| A | GB-A-2 155 394 (JAMAK INC.)<br>– – – – – | | TECHNICAL FIELDS SEARCHED (Int. Cl.5)<br><br>A 45 D<br>B 29 C |

The present search report has been drawn up for all claims

| Place of search | Date of completion of search | Examiner |
|---|---|---|
| The Hague | 13 February 91 | SIGWALT C. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

 

& : member of the same patent family, corresponding
document